# EUROPEAN PATENT APPLICATION

(11) **EP 3 160 213 A1**
(43) Date of publication of application: **26.04.2017**
(21) Application number: 16194318.8
(22) Date of filing: 18.10.2016
(51) Int. Cl.: H05B 37/03, H05B 33/08

(54) **A PROTECTION DEVICE FOR LIGHTING SYSTEMS AND CORRESPONDING METHOD**

(30) Priority: 23.10.2015 IT UB20154763
(71) Applicant: OSRAM GmbH, 80807 München (DE); Osram S.p.A. - Societa' Riunite Osram Edison Clerici, 20126 Milano (IT)
(72) Inventor: DE ANNA, Paolo, 31039 Vallà di Riese Pio X (Treviso) (IT); QUAGGIOTTO, Andrea, 30020 Marcon (Venezia) (IT)
(74) Representative: Bosotti, Luciano

(57) **Abstract**

A protection device (10) for electrical lighting systems (S) includes:
- first (L1) and second (L2) electrical supply lines and a neutral line (N), the second supply line (L2) being switchable (SW) between a floating state and a powered state, and
- a PTC thermistor (12) interposed between second line (L2) and neutral line (N), said PTC thermistor (121) having a first and a second impedance value when when said second supply line (L2) is respectively in the floating state and in the powered state, the second impedance value being higher than the first impedance value.

## Description

### Technical Field

The description relates to lighting systems.

One or more embodiments may find application e.g. in street lighting systems with lighting level control.

### Technological Background

In various lighting technology applications, e.g. in street lighting, lighting systems may be employed which enable a controlled reduction of the brightness level, e.g. in the middle of the night.

Parasitic capacitances and resistances among the wires of supply lines may however cause an undesirable triggering of the Electronic Control Gear (ECG) responsible for such reduction of lighting intensity.

This phenomenon is known to be caused by leakage currents injected into said circuits due to the presence of such parasitic capacitances and resistances (e.g. due to the high parasitic capacitance of shielded cables and/or to the low resistance from wire to wire that is to be found in wires which have been operating for a long time).

Moreover, it has been observed that also other impedances (e.g. varistors), arranged between the line controlling the brightness reduction function and the power supply, may cause an undesired activation of such function.

Such problems may be countered in various ways.

For examples, it is possible to resort to relays (either conventional or solid-state relays) arranged in the mains cabinets hosting the switchboards of the lighting system, e.g. with the AC coil which may be triggered by the voltage of the line controlling the brightness dimming function.

Despite its effectiveness, this solution may have drawbacks due to its arrangement, e.g. at the beginning of the installation supply line, and may pose difficulties of installation in existing systems e.g. with a series insertion and specific wires arrangements.

Another solution may envisage the use of power resistors, arranged in such a way as to at least partially drain the leakage current between the line which activates the brightness dimming function and the other lines.

This solution, however, leads to rather high dissipation levels, with negative consequences as regards power and heat generation, as well as the duration of useful life.

### Object and Summary

One or more embodiment aim at overcoming the previously outlined drawback.

According to one or more embodiments, said object may be achieved thanks to a protection device having the features set forth in the claims that follow.

One or more embodiments may also concern a corresponding method.

The claims are an integral part of the technical teaching provided herein with reference to the embodiments.

### Brief Description of the Figures

One or more embodiments will now be described, by way of non-limiting example only, with reference to the annexed Figures, wherein:
- Figures 1 and 2 generally show a possible application context of one or more embodiments,
- Figure 3 is a block diagram exemplifying embodiments,
- Figure 4 is a further block diagram exemplifying embodiments,

- Figure 5 is a time diagram showing possible operating features of one or more embodiments, and
- Figures 6 and 7 are block diagrams exemplifying possible implementations of one or more embodiments.

### Detailed Description

In the following description, numerous specific details are given to provide a thorough understanding of various exemplary embodiments. The embodiments may be practiced without one or several of the specific details, or with other methods, components, materials, etc. In other instances, well-known structures, materials, or operations are not shown or described in detail to avoid obscuring various aspects of the embodiments.

Reference throughout this specification to "one embodiment" or "an embodiment" means that a particular feature, structure, or characteristic described in connection with the embodiment is included in at least one embodiment. Thus, the possible appearances of the phrases "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are for convenience only, and therefore do not interpret the extent of protection or the scope of the embodiments.

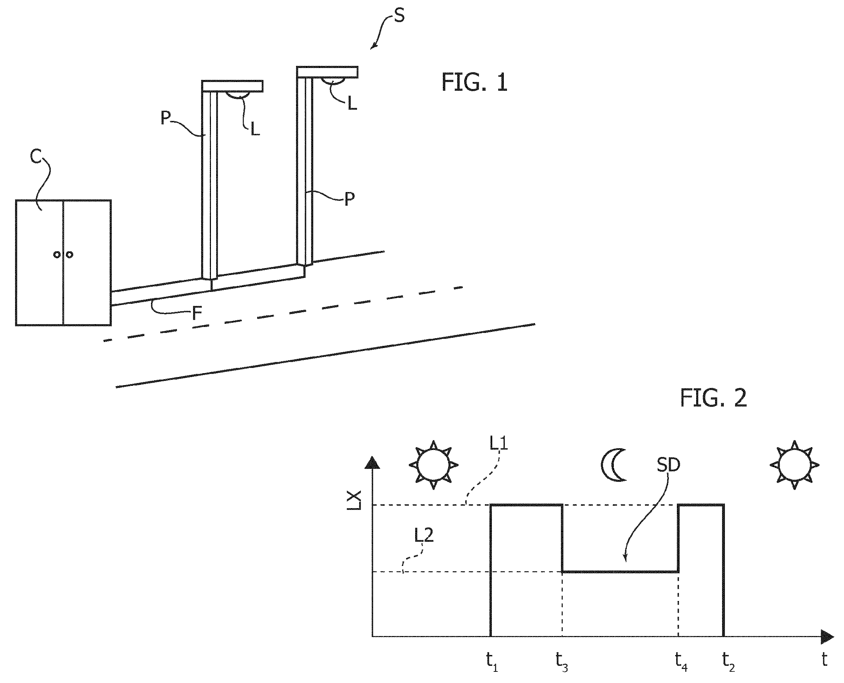

In Figure 1, reference S denotes a lighting system, e.g. a street lighting arrangement, comprising a plurality of lamps L which are mounted e.g. on top of lamp poles or posts P.

Figure 1 refers to the possible presence of two lamp posts. It will be appreciated that one or more embodiments are applicable to lighting arrangements comprising a different number of lamps or posts, which is generally higher than exemplified herein.

Lamps S (which may be e.g. solid-state electrically-powered lamps, such as LED lamps) are supplied via a supply line F which may be connected to a cabinet C hosting switchboards which receive the power supply (e.g. from the mains) and distribute it to lamps L.

In one or more embodiments supply line F, which may have the features better detailed in the following, may be provided with a brightness control function for lamps L, which is sometimes referred to as STEP DIM (SD), adapted to be performed as schematically exemplified in Figure 2.

It being assumed, by way of example, that lighting system S is adapted to be operated, i.e. to be on, between a time t₁ and a time t₂ (e.g. during night hours), it is possible to envisage the presence of at least two different lighting levels:
- a first, "higher" lighting level L1, and
- a second, "lower" lighting level L2.

The second level L2 may be adopted, e.g., in the middle of the night, both for energy saving purposes (when the lighting level is lower, the system has a reduced consumption), and in order to avoid disturbing people sleeping in neighbouring houses with an excessively high lighting level.

The control of such a function (which in the following is also referred to simply as SD, short form for STEP DIM) may be carried out by control assemblies SDC adapted to be triggered by a switch SW (e.g. a solid-state relay) arranged e.g. in cabinet C, which may also house the control modules regulating the various operating parameters of system S, such as e.g. the on and off times t₁ and t₂ of lighting system S, the times of activation t₃ and deactivation t₄ of the SD function, the levels of light brightness L1 and L2 and other optional lighting levels which may be provided.

This may be implemented according to criteria known in themselves, so that they do not require a detailed description herein.

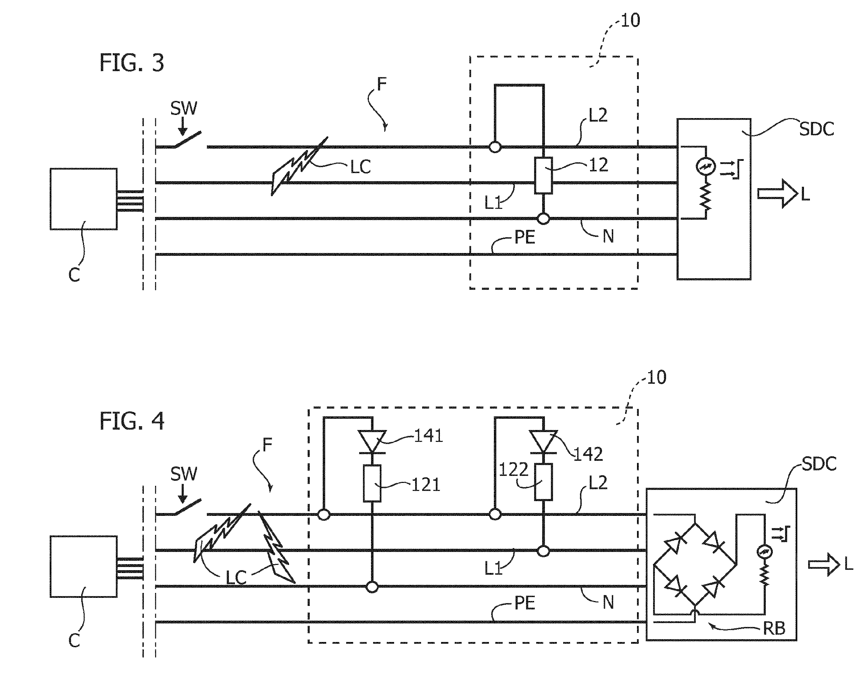

The components denoted as SDC in Figures 3 and 4 may be for example components sold by companies of the group of the Applicants under the trademarks OT 3 DIM and OT 4 DIM. The features thereof are therefore considered as known in themselves, so that they do not require a detailed description herein.

As far as the present description is concerned, it will suffice to recall that, in one or more embodiments, supply line F of lamps L of system S may include:
- a first power supply line L1,
- a second power supply line L2, wherein there may be interposed a switch SW adapted to activate the SD function,
- a neutral line N, and
- a Protective Earth (PE) line.

One or more embodiments may envisage that:
- when the SD function is off (time intervals t₁-t₃ and t₄-t₂ in Figure 2), switch SW is open (i.e. non conductive), so that the second line L2 is "floating";
- when the SD function is on (time interval t₃-t₄ in Figure 2), switch SW is closed (i.e. conductive) and the second line L2 is powered, i.e. with a voltage applied thereto (e.g. at 230 Vac 50 Hz).

For example, the communication of the information regarding the activation of the SD function may take place through the reading of the voltage or the current generated on a measure resistance, e.g. the current being sensed by a photo-coupler in order to generate a signal to be sent to the control unit of a LED driver.

A component SDC as exemplified in Figure 4 may include a rectifying bridge RB, acting between line L2 and neutral line N.

In any case, the operation of components SDC exemplified in Figures 3 and 4 may be considered approximately as mutually corresponding, apart from e.g. the possible different method of sensing the presence of a signal and/or the possible different internal structure of the components. This is due e.g. to the fact that the SD function may be also implemented with Step DIM inverse logic.

The diagrams of Figures 3 and 4 exemplify the possible effects of leakage currents LC which may appear, e.g., between lines L2 and L1 (Figure 3) or between line L2 and line L1, or between line L2 and neutral line N (Figure 4).

Such leakage currents, which may be induced by the parasitic phenomena mentioned in the introductory part of the present description, may lead to the undesired triggering of component SDC and to the activation of the SD function, even though switch SW is open, because at that time the SD function is not expected to be activated.

Moreover, it will be appreciated that, although the problem is exemplified with reference to the SD function, a similar problem may arise in all those situations wherein a supply line as line L2 is adapted to switch alternatively, e.g. due to the operation of a switch SW, from a floating state to a powered state, e.g. wherein a control signal is adapted to be transferred to a component such as component SDC.

Therefore, one or more embodiments may be used as a protection against the effects of leakage currents, in the situations wherein a supply line, such as line L2, is adapted to switch alternatively, e.g. due to the operation of a switch SW, from a floating state to a powered state, e.g. wherein a control signal is adapted to be transferred to a component such as component SDC.

One or more embodiments may employ at least a PTC (Positive Temperature Coefficient) thermistor, i.e. a component exhibiting a resistance which increases, e.g. non linearly, as temperature rises (i.e. the resistance whereof increases due to the heating induced by the current traversing it), with the purpose of draining the possible leakage currents LC, while avoiding the undesirable activation of component SDC when line L2 is in the floating state.

As used herein, the phrase "PTC thermistor" generally identifies a behaviour which makes resistance dependent on temperature according to a positive coefficient, without limitations of the technology employed (e.g. the materials, the structure and the manufacturing process). For example, some PTC thermistors are known as "silistors", made of silicon, or some PTC thermistor are of the switching type, optionally with a polymeric basis, and/or active components which are e.g. available on the market under the trademark "Bourns TBU-CA085-050-WH High-Speed Protectors" (in practice high-voltage mosfets with control logic).

In one or more embodiments, the use of PTC thermistors may offer an advantage deriving from the simplicity and intrinsic robustness of a passive component.

For example, in one or more embodiments as exemplified in Figure 3, a PTC thermistor 12 may be interposed between line L2 (between switch SW and component SDC) and neutral line N.

In one or more embodiments, as exemplified in Figure 4, a first PTC thermistor 121 may be interposed between line L2 (between switch SW and component SDC) and the neutral line N, while a second PTC thermistor 122 may be interposed between line L2 (again between switch SW and component SDC) and line L1.

In one or more embodiments as exemplified in Figure 4, due to the presence of a rectifying bridge RB in component SDC, respective diodes 141, 142, e.g. having the anodes facing towards line L2, may be connected in series with the PTC thermistor 141, and the PTC thermistor 142, thus offering the possibility of draining parasitic currents LC without affecting the operation of rectifying bridge RB.

When they are not powered, PTC thermistors, i.e. 12, 121, 122, are "cold" (e.g. at room temperature) and therefore have a reduced first impedance (resistance) value, thereby being adapted to drain leakage currents while avoiding an accidental triggering of component SDC.

On the contrary, when component SDC must actually be triggered, so that it may activate in turn the SD function, the closing of switch SW causes PTC thermistors (12 - Figure 3, or 121, 122 - Figure 4) to be traversed by a current. This current brings about a rapid heating of the PTC thermistors and the consequent switching thereof to a second impedance value which is (much) higher than the first, with the current passing through PTC thermistor(s) 12, 121, 122 being reduced so much that its influence becomes negligible on the operation of line L2 and of the component SDC driven thereby.

In order to deactivate the SD function, switch SW is opened (made non-conductive) by bringing line L2 back to floating conditions, and PTC thermistors 12, 121, 122 stop being traversed by the supply current. They get cold and go back to the low impedance value, so that they resume their draining function of leakage currents LC.

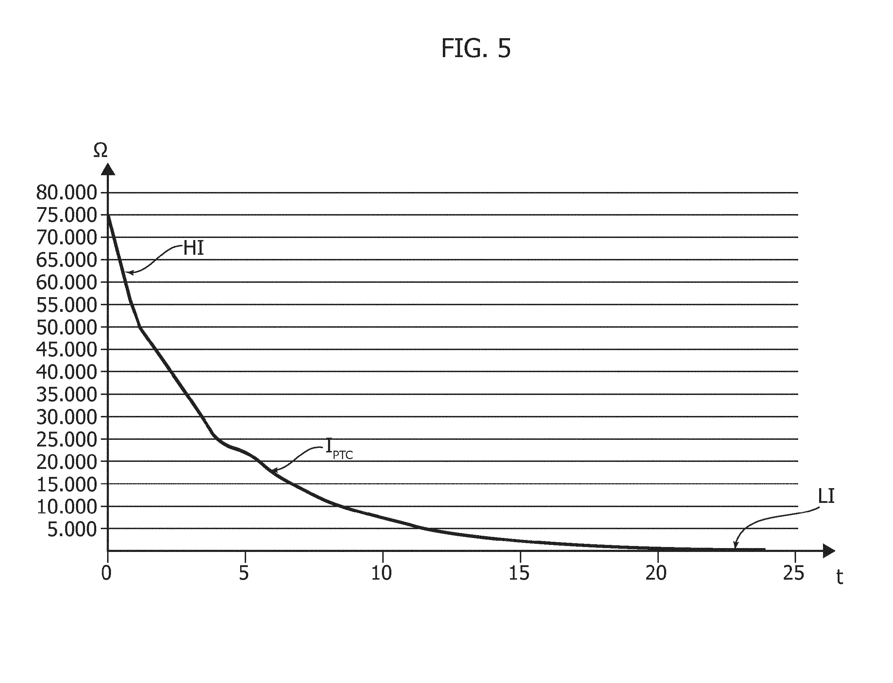

The diagram in Figure 5 exemplifies a possible time trend of impedance (resistance) I_{PTC} of one of the PTC thermistors 12, 121, 122 at deactivation of the SD function (e.g. t₄ in Figure 3).

Figure 5 shows, by way of example, that within a few seconds (e.g. 20-25 seconds, according to the thermal capacity of PTC thermistors, which derives e.g. from their size) from deactivation (opening of switch SW), a passage takes place from a high impedance value HI to a low impedance value LI.

Moreover, the passage in the opposite direction (from the low impedance value L1 to the high impedance value HI) may be achieved very rapidly, e.g. in less than one second.

By way of example, and without limitating the embodiments:
- low value LI may amount (e.g. at 25°C, i.e. approximately at room temperature) to 50-100 ohm (in any case lower than 1,000 ohm),
- high value HI may amount (e.g. with PTC at 100°C) to to about 75,000 ohm (anyway higher than 10,000 ohm).

In one or more embodiments, the ratio between the second impedance value HI (the "high" value, the PTC thermistor being traversed by current and therefore being hot) and the first impedance value LI (the "low" value, the PTC thermistor not being traversed by a current and therefore being cold) may amount to at least 1 to 10.

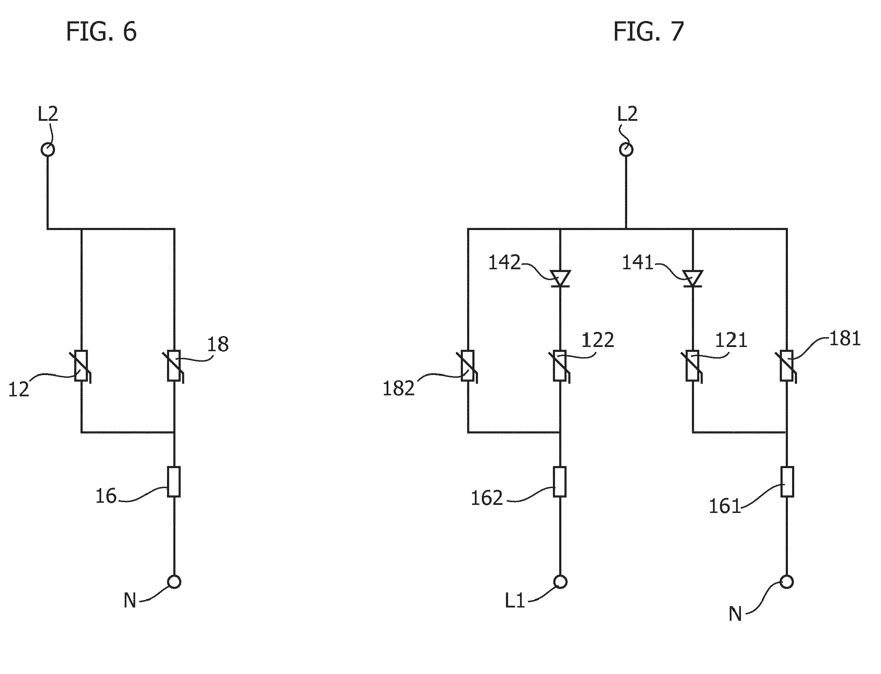

The tests carried out with reference to implementation modes as shown in Figure 6 (the diagram being exemplified in Figure 3) have confirmed the possibility of employing, as a PTC thermistor 12, e.g. a PTC thermistor Epcos B59107-J130-A20, adapted to be supplied (at 230 Vac 50 Hz) for 6.5 hours a day (time interval t₃ - t₄ of Figure 2), with one cycle per day and the ability to absorb leakage current of 1-20 mA rms.

Moreover, an optional and not mandatory possibility is given to provide the presence of a conventional protection varistor 18, which may be connected e.g. in parallel to the PTC thermistor.

Tests carried out with reference to implementation arrangements as shown in Figure 7 (diagram exemplified in Figure 4) have confirmed the possibility of using, as a resistor 121 interposed between line L2 and neutral line N, e.g. a PTC thermistor of the previously described kind.

As a PTC thermistor 122, interposed between lines L1 and L2, it is possible to resort to a PTC thermistor B59109-J130-A020, because, as it is connected between two "phases", such a thermistor may withstand, while powered, a voltage of 400 Vac and 50 Hz.

The possibility has been investigated of achieving perfectly satisfactory results with PTC thermistors 121, 122 supplied for 6.5 hours a day, one cycle per day, with the ability to absorb leakage currents of 1-100 mA rms.

In one or more embodiments, PTC thermistor 121 and PTC thermistor 122 may therefore be rated for different supply voltage values when second line L2 is in said powered state.

Also in the case exemplified in Figure 7 the possibility is given, although it is optional and therefore not mandatory, of providing the presence, e.g. in parallel with PTC thermistors, of conventional protection varistors 181, 182.

In the diagrams of Figures 6 and 7, references 16 and 161, 162 denote protection fuses (optionally provided e.g. for safety reasons, e.g. in the case of failures of PTCs and/or of varistors), not explicitly shown in Figures 3 and 4.

In one or more embodiments, PTC thermistor 121 and PTC thermistor 122 may optionally have a first (low) impedence level LI and a second (high) impedance level HI which are different for each PTC thermistor, with:
- the first PTC thermistor 121 having a first impedance value LI when the second supply line L2 is in a floating state, and a second impedance value HI when the second supply line L2 is in a powered state, said second impedance value HI being higher than the first impedance value LI; and
- the second PTC thermistor 122 having a (respective) first impedance value LI when the second supply line L2 is in a floating state, and a (respective) second impedance value HI when the second supply line L2 is in a powered state, said (respective) second impedance value HI being higher than the (respective) first impedance value LI.

In one or more embodiments, device 10 according to one or more embodiments may be designed as a shunting box, and is adapted to be easily installed either into cabinet C, in parallel with an existing wiring installation, or in a peripheral portion, e.g. near lamp L and/or on pole or post P.

In comparison with solutions envisaging the use of conventional resistors (or a lamp), one or more embodiments as exemplified herein have a lower power absorption and a consequent lower heat dissipation. This is achieved while ensuring at the same time an effective draining action on leakage currents and protection of component SDC against accidental triggering.

Without prejudice to the basic principles, the implementation details and the embodiments may vary, even appreciably, with respect to what has been described herein by way of non-limiting example only, without departing from the extent of protection.

Said extent of protection is defined by the annexed claims.

## Claims

1. A protection device (10) for electrical lighting systems (S), including:
- first (L1) and second (L2) electrical supply lines and a neutral line (N), the second supply line (L2) switchable (SW) between a floating state and a powered state, and
- a PTC thermistor (12; 121) set between said second line (L2) and said neutral line (N), said PTC thermistor (12; 121) having a first impedance value (LI) with said second supply line (L2) in said floating state and a second impedance value (HI) with said second supply line (L2) in said powered state, said second impedance value (HI) higher than said first impedance value (LI).

2. The protection device of claim 1, including a further PTC thermistor (122) set between said second line (L2) and said first line (L1), said further PTC thermistor (122) having a first impedance value (LI) with said second supply line (L2) in said floating state and a second impedance value (HI) with said second supply line (L2) in said powered state, said second impedance value (HI) higher than said first impedance value (LI).

3. The protection device of claim 2, including a first diode (141) in series with said PTC thermistor (121) and a second diode (142) in series with said further PTC thermistor (122), said first and second diodes (141, 142) preferably having their anodes facing towards said second line (L2).

4. The protection device of any of the previous claims, wherein said second impedance value (HI) is at least 10 times said first impedance value (LI).

5. The protection device of any of the previous claims, wherein:
- said second impedance value (HI) is in excess of 10,000 ohm, and/or
- said first impedance value (LI) is lower than 1000 ohm.

6. The protection device of claim 2 or any of claims 3 to 5, taken in combination with claim 2, wherein said PTC thermistor (121) and said further PTC thermistor (122) are rated for different supply voltages with said second line (L2) in said powered state.

7. The protection device of any of claims 1 to 6, the protection device (10) coupled to a dimming control component (SDC) for an electrical lighting system (S), wherein a control signal is transferred over said second line (L2) in said powered state as a dimming control signal for said component (SDC).

8. A method of protecting against leakage currents electrical lighting systems (S) including first (L1) and second (L2) electrical supply lines and a neutral line (N), the second supply line (L2) switchable (SW) between a floating state and a powered state,
the method including setting a PTC thermistor (12; 121) between said second line (L2) and said neutral line (N), said PTC thermistor (12; 121) having a first impedance value (LI) with said second supply line (L2) in said floating state and a second impedance value (HI) with said second supply line (L2) in said powered state, said second impedance value (HI) higher than said first impedance value (LI).

9. The method of claim 8, including setting a further PTC thermistor (122) between said second line (L2) and said first line (L1), said further PTC thermistor (122) having a first impedance value (LI) with said second supply line (L2) in said floating state and a second impedance value (HI) with said second supply line (L2) in said powered state, said second impedance value (HI) higher than said first impedance value (LI).
